# EUROPEAN PATENT SPECIFICATION

(11) **EP 0 450 606 B1**
(45) Date of publication and mention of the grant of the patent: **08.03.1995**
(21) Application number: 91105279.3
(22) Date of filing: 03.04.1991
(51) Int. Cl.: G02C 13/00, A61L 2/00

(54) **Contact lens cleaning instrument**
Instrument zur Reinigung von Kontaktlinsen
Instrument pour le nettoyage de lentilles de contact

(30) Priority: 03.04.1990 JP 36231/90
(43) Date of publication of application: 09.10.1991
(73) Proprietor: Menicon Co., Ltd., Nagoya-shi Aichi-ken (JP)
(72) Inventor: Tanaka, Toyoyasu, Nagoya-shi, Aichi-ken (JP); Yamamoto, Yasuyoshi, Komaki-shi, Aichi-ken (JP)
(74) Representative: Türk, Gille, Hrabal, Leifert

(56) References cited:
- EP-A- 0 063 472
- EP-A- 0 370 297
- WO-A-85/01193
- PATENT ABSTRACTS OF JAPAN, vol. 12, no. 468 (P-797)(3315), 8 December 1988 ; & JP-A-63 187 216
- PATENT ABSTRACTS OF JAPAN, vol. 13, no. 590 (P-984), 26 December 1989 ; & JP-A-1 251 482

## Description

The invention relates to a case for cleaning and keeping contact lenses, said case comprising the features of the preamble of claim 1.

Contact lenses have been hitherto manually and carefully cleaned by means of a puff like a powder puff or the like which soaks in cleaning medium.

Further, there is known a device having elastomeric pads to be in contact with both surfaces of the contact lens and to be vibrated mechanically so that the contact lens is cleaned (JP-U1- 125820/1988 and JP-A-63-187 216).

In case of cleaning by means of a puff it is not easy to handle the lenses since the lenses are small. Moreover, in such a manual working, there is not only the danger to easily damage the lenses due to mistake of handling but also the disadvantage that it takes much time to clean the whole surfaces of the lenses.

In case of cleaning by means of the above-mentioned mechanical vibration, the lenses and the pads are provided with regular relative motion. Therefore, uneveness of cleaning happens, and in some cases, it happens that there are some parts of lenses which are cleaned well, and other parts which are not cleaned so well. Further, in some cases it happens that parts of the lenses are not cleaned at all.

In a further known device for cleaning contact lenses (EP-A-0 370 297) a ball is used as cleaning means which is to be inserted in a cleaning vessel having an open recessed cleaning chamber the bottom of which has a concave inner surface which is complementarily curved to the curvature of the lenses to be cleaned so that the contact lens can be mounted in face-to-face contact therewith. By vibrating this device the cleaning ball cleans the inner surface of the contact lens while the outer surface of the contact lens is cleaned by movement of the lens relative to the bottom surface of the cleaning chamber. However, this known device is not suitable to keep the contact lenses for cleaning and storing purposes. Also, this known device is suitable only for handling one contact lens for cleaning purposes.

The object of the invention is to delete the above-mentioned disadvantages and to provide a case which can clean contact lenses within short time and easily without the risk of damaging the lenses, which can clean both surfaces of the lenses at the same time, and can serve also as case for keeping contact lenses.

Under consideration of this object the invention provides a case comprising the features of claim 1. Preferred improvements of the invention are subject matter of the dependent subclaims.

The case of the present invention is used as follows:

Firstly, cleaning medium is poured into the cleaning chamber of the cleaning vessel, and the lens and the cleaning ball are inserted in the cleaning vessel. Next, the cleaning vessel is held between fingers and is shaked horizontally on the table with pushed by hands, then the cleaning vessel is vibrated. At the same time, since the cleaning ball is also vibrated, the both outside and inside surfaces of the lens are rubbed with the bottom concave surface of the cleaning chamber and the cleaning ball, and the lens is cleaned.

At the time, the shaking movement by hand is not always uniform and either the direction of vibration or vibration vary remarkably. Therefore, the both surfaces of the lenses are rubbed all the more thoroughly as compared with the mechanical vibration, and the both side surfaces of the lenses become clean, then spots or dirtiness does not remain.

Furthermore, the cleaning case of the present invention can be used as a case for keeping lenses when the cleaning case is not used for the purpose of cleaning.

That is to say, the cleaning vessel of the present invention can be considered as a case for keeping lenses.

Hereinafter, embodiments of the instrument of the present invention are explained with reference to the accompanying drawing, wherein
Fig. 1 is a perspective view showing an embodiment of the cleaning case of the present invention,
Fig. 2 is a partial sectional side elevation view showing the case of Fig. 1,
Fig. 3 is a sectional view showing another embodiment of the cleaning case of the present invention,
Fig. 4 is a sectional view showing another embodiment of the case of the present invention,
Fig. 5 is a perspective view showing another embodiment of the cleaning case of the present invention,
Fig. 6 is a sectional view of the case of Fig. 5,
Fig. 7 is a perspective view showing another embodiment of the cleaning case of the present invention,
Fig. 8 is a partially sectional side elevation view of the case of Fig. 7, and
Fig. 9 is a sectional view showing another embodiment of the cleaning case of the present invention.

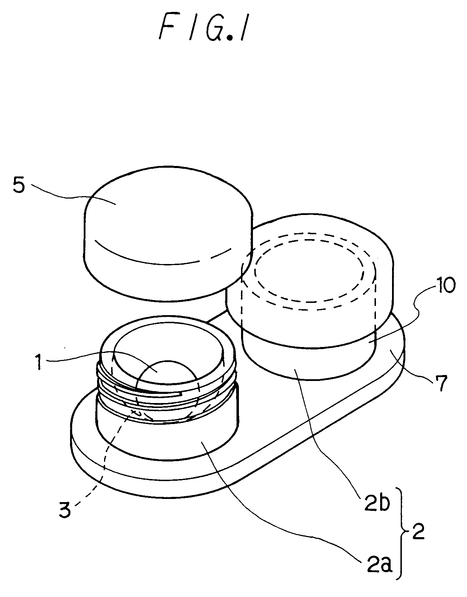

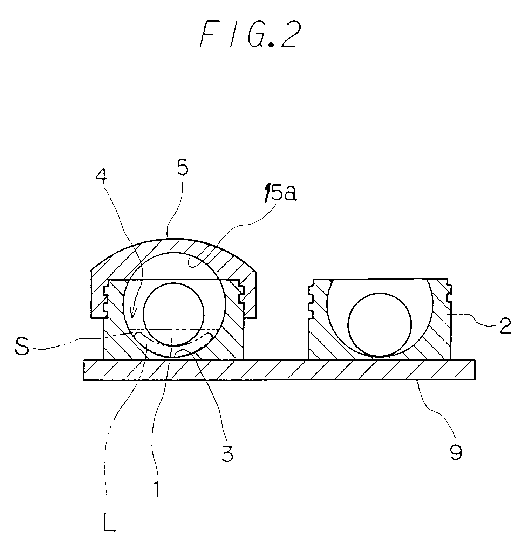

Referring to Figs. 1 and 2, the cleaning case comprises a cleaning ball 1, a cleaning vessel 2 and a cleaning chamber 4 which is formed in the cleaning vessel 2 and which has a bottom surface 3.

The cleaning ball 1 is preferably formed as spherical body. However, a slightly depressed ball having an ellipsoidal shape can also be employed. It is preferable that the radius of curvature of the cleaning ball 1 is smaller than that of the above-mentioned bottom surface 3, and the radius is approximately 2 to 20 mm. For instance, in case that one cleaning ball is used, it is preferable that the radius of the cleaning ball is approximately 0.5 to several mm smaller than the radius of curvature of the above-mentioned bottom surface 3.

The material of the cleaning ball is not limited, and various materials can be employed in accordance with the type (soft or hard contact lens) and hardness of the lenses. For example, glass or plastic (especially for soft contact lenses) and a soft synthetic resin, a rubber or a foaming material (especially for hard contact lenses) can be employed as material of the cleaning ball.

When light material is used for the cleaning ball 1 such as a foaming material, it is preferable to embed a weight, such as a metal and the like, in the ball.

Further, the surface of the cleaning ball 1 can be provided with uneveness (or roughness) with mesh-like pattern and the like, in order to improve cleaning effect.

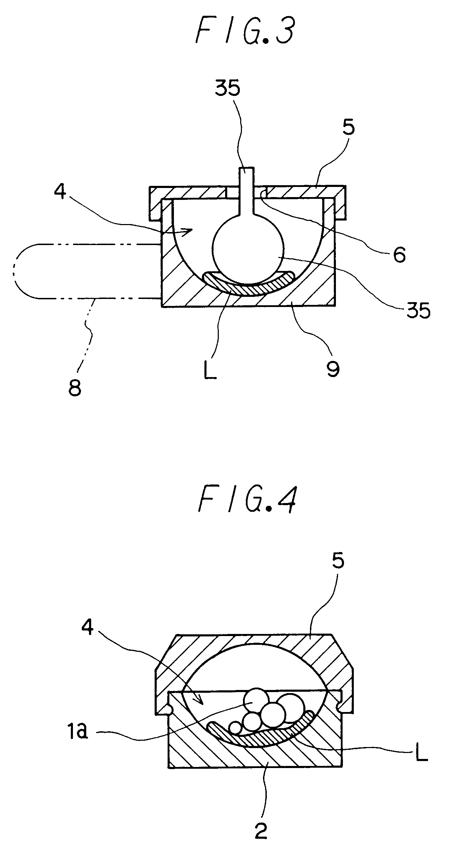

And besides, as shown in Fig. 3, when a cleaning ball 35 is provided with a stem 35a, the ball 35 can be conveniently handled. When the stem 35a is provided on the ball 35, at least the lower surface of the cleaning ball 35 is required to be spherical, and the upper surface can be made as a flat surface or the like.

The cleaning vessel 2 is a vessel to house a lens L and the cleaning ball 1 in order to clean the lens. The cleaning vessel 2 is formed with a recessed cleaning chamber 4, as shown in Fig. 2, and the bottom surface 3 of the chamber 4 is formed into a curved surface, such as a spherical surface or an ellipsoidal surface, so as to obtain a face-to-face contact with the lens. The radius of curvature should normally be 7 to 20 mm in accordance with the lens. The material of the cleaning vessel 2 is not limited, and various materials, for example, plastic or the like, can be employed.

It is preferable that both volume and depth of the cleaning chamber 4 are slightly larger than that of the cleaning ball 1 so that the cleaning ball can move moderate, and bound and large rolling of the cleaning ball 1 are controlled.

Further, when the bottom surface 3 of the cleaning chamber 4 is provided with the same uneveness, such as a mesh and the like, as the surface of the above-mentioned cleaning ball 1, the effect of cleaning lenses is improved.

A cap 5 for covering the cleaning chamber 4 is detachably mounted on the upper portion of the cleaning vessel 2 by menas of engagement of threads or the like. The cap 5 is mounted thus that the lens L, the cleaning medium and the cleaning ball 1 should fly out from the cleaning chamber 4 when the cleaning vessel 2 is shaked by hand.

And besides, as to the cap 5, a snap engagement can be employed as means for fixing the cap 5 to the cleaning vessel 2.

Further, the inside surface 5a of the cap 5 is preferably recessed such as a spherical surface or an ellipsoidal surface which is continuous to the inner surface of the cleaning vessel 2. Thereby, there is the advantage that the cleaning ball 1 is steadied smoothly, even if the cleaning ball 1 bounds. In that case, the inner surface 15a of the cap 5 is also operated as cleaning chamber 4.

When a cleaning ball 35 having a stem 35a is used, as shown in Fig. 3, it is preferable to provide a hole 6 at the center of the cap 5.

Thereby the stem 35a can be prevented from dropping into the cleaning chamber 4.

The external appearance and shape of the cleaning vessel 2 is not limited, and, for example, a cylindrical shape or the like is employed so that a side portion 10 can be gripped.

The cleaning vessel 2 of Fig. 2 is constructed such that two cleaning vessels 2a and 2b are integratedly coupled by a bottom plate 7. The cleaning vessel of this type can be shaked by gripping the side portion 10 of one of the cleaning vessels, or the common bottom plate 7.

And besides, when the side portion and the like are provided with a gripping portion 8 (Fig. 3), the cleaning vessel can be treated the more easily.

It is preferable to form the cleaning vessel 2 so as to be relatively depressed, since shaking directions can be definite when the cleaning vessel 2 is horizontally shaked by fingers. Further, when the bottom surface 9 of the cleaning vessel 2 is flat, the cleaning vessel 2 can be shaked so that the cleaning vessel 2 is slided on a stand having a flat surface, such as a desk. Therefore, there is the advantage that the cleaning ball 1 and the lens L are prevented from bounding or rolling.

Next, a cleaning method using the above-mentioned cleaning case is explained.

Firstly, cleaning medium S is poured into the cleaning chamber 4, and a lens L is inserted into the cleaning chamber 4, then the cleaning ball 1 is put on the lens.

As cleaning medium S a cleaning solution for contact lenses is preferably used. Further, an abrasive solution (solution including abrasive) can be used instead of a cleaning solution. The amount of the medium to be used is generally 0.03 to 1.0 cm³.

Secondly, after the cap 5 is fastened, the cleaning vessel 2 is put on a stand having a flat surface, and then the cleaning vessel 2 is gripped and vibrated so as to be turned in right and left directions. Therefore, the lens L is shaked on the bottom surface 3 and the cleaning ball 1 is vibrated on the lens L, and both outside and inside surfaces of the lens L are cleaned at the same time. The cleaning ball 1 has not only a function as weight for controlling bound of the lens L but also a function as a mass element for providing relative motion between the cleaning chamber 4 and the lens L and between the lens and the ball during vibration.

And besides, under normal condition, it is sufficient to clean for 30 to 60 seconds.

After cleaning, the lens L is taken out of the cleaning vessel 2 and washed in physiological saline water or purified water, then the lens L is used.

Further, in case that the cleaning ball 1 can be kept in another vessel, then the cleaning vessel could be used as case for keeping.

Hereinafter, referring to Fig. 4, another embodiment of the cleaning case of the present invention is explained.

In case of the cleaning case of Fig. 4, several cleaning balls 1a, which are smaller than the lenses L, are contained in one cleaning chamber (diameter of the cleaning balls is 1 to 3 mm). When contact lenses having a special design, such as a high plus power lens or a high minus power lens, are cleaned, plural cleaning balls 1a are preferably used.

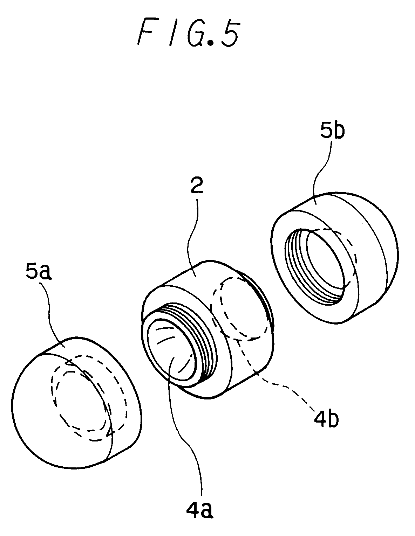

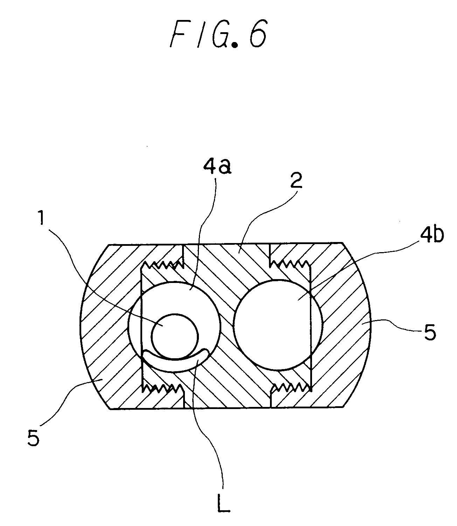

The cleaning case shown in Figs. 5 and 6 comprises a cylindrical cleaning vessel 2. The cleaning vessel 2 is provided with two cleaning chambers 4a and 4b at both right and left end portions such that the cleaning chambers 4a, 4b are directed toward opposite directions on the same shaft axis. On both right and left side of the cleaning vessel 2 each cap 5a and 5b is provided by means of engagement of threads. The cleaning case is retained such that each cleaning vessel is upside or downside, and then the lens contained in the cleaning chamber 4a or 4b, which is the upper side, is cleaned.

The cleaning case of Figs. 5 and 6 is easy to carry and can be used as case for keeping. And, moreover, the above-mentioned cleaning case has the effect that the contact lenses can be cleaned when carried.

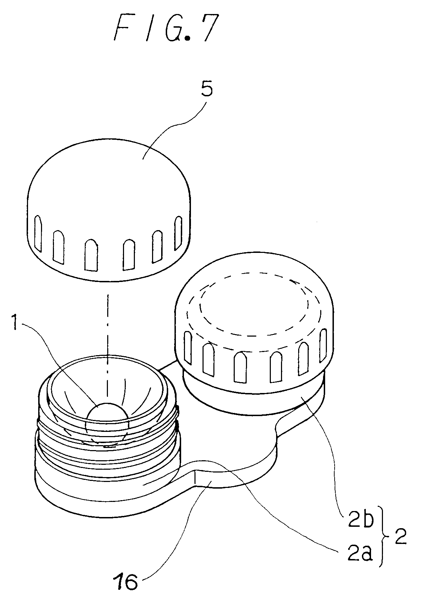

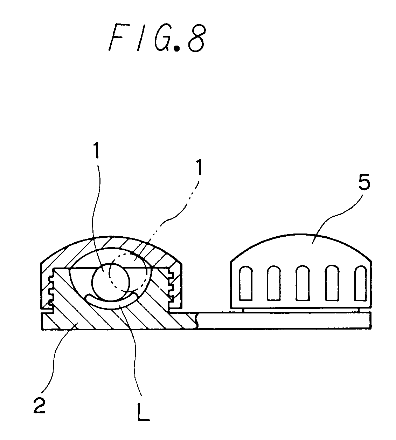

In case of the cleaning case shown in Figs. 7 and 8, when the cap 5 is mounted on the cleaning vessel 2, the inside surface of the cleaning vessel 2 and the inside surface of the cap 5 do not form a complete spherical surface but form a depressed ellipsoidal shape, or a "discus-like" shape. Therefore, the substantial depth of the cleaning chambers 4a and 4b can be shallow, and the cleaning ball 1 can be prevented from moving unnecessarily. Further, since the height of the whole cleaning case can be low, it is convenient to carry.

Furthermore, one side of the side face of the cleaning case of Figs. 7 and 8 is provided with a projection 16 between both cleaning vessels so that both front and rear sides of the cleaning vessel become definite. Therefore, right and left sides of cleaning vessels can be easily distinguished, and both right and left contact lens can be respectively housed in or taken out of the correct cleaning vessel.

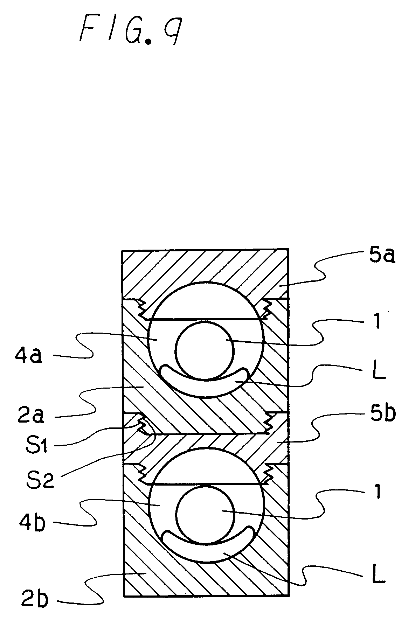

The cleaning case shown in Fig. 9 is composed of two sets of cleaning cases, which are combined with each other in axial direction.

The upper cleaning case comprises a cleaning vessel 2a having a thread portion S₁ at the lower end thereof and a cap 5a which is screwed with the upper end of the cleaning vessel 2a. Furhter, the lower cleaning case comprises a cleaning vessel 2b having a flat lower surface and a cap 5b which is screwed with the upper end of the cleaning vessel 2b.

As to the lower cleaning case the cap 5b has a thread portion S₂ which can be screwed with the thread portion S₁ of the upper cleaning vessel 2a. Therefore, the upper cleaning vessel 2a can be coupled with the cap 5b such that the thread portion S₁ is engaged with the thread portion S₂.

According to the present invention, for instance, the left-side-contact lens L is inserted into the upper side cleaning chamber 4a and the right-side-contact lens L is inserted into the lower side cleaning chamber 4b. Therefore, both contact lenses can be cleaned at the same time by moving the case in right and left directions on a desk or the like.

And besides, when a letter "L" is inscribed on the upper cap 5a and a letter "R" is inscribed on the lower cap 5b, any erroneous use (the right-side-contact lens is used in the left eye) can be conveniently prevented.

As means for engaging the above-mentioned caps 5a, 5b with the cleaning vessels 2a, 2b and as means for engaging the upper cleaning vessel 2a with the lower cap 5a, snap engagement can be employed instead of thread engagement.

The cleaning case of the present invention mentioned hereinbefore can be used not only for soft contact lenses but also for hard contact lenses. However, the cleaning case of the present invention is preferably used for soft contact lenses.

By utilizing the cleaning case of the present invention, contact lenses can be easily cleaned within short time. Further, both surfaces of the lens can be cleaned at the same time.

## Claims

1. Case for cleaning and keeping contact lenses (L), comprising two cleaning vessels (2; 2a, 2b) each formed with a recessed cleaning chamber (4; 4a, 4b) for housing a contact lens and each provided with a cap (5; 5a, 5b), each cleaning chamber having a bottom concave inner surface which is complementarily curved to the curvature of the contact lens (L) so that the contact lens can be mounted in face-to-face contact, therewith,
**characterized in that** within each cleaning chamber (4; 4a, 4b) at least one cleaning ball (1; 1a; 35) is housed.

2. The case of claim 1, characterized in that a plurality of cleaning balls (1a) are housed in each cleaning chamber (4a, 4b).

3. The case of claim 1, characterized in that the cleaning ball (35) is provided with a stem (35a) extending through a hole (6) provided in the cap (5) of the cleaning chamber (4).

4. The case of one of claims 1 to 3, characterized in that the surface of the cleaning balls (1; 1a; 35) and/or the bottom of the cleaning chamber (4; 4a, 4b) are formed with a roughness.

5. The case of one of claims 1 to 4, characterized in that the cleaning vessel (2; 2a, 2b) is provided with a grip (8; 16) on the outside.

6. The case of one of claims 1 to 5, characterized in that the outer bottom surface (9) of said cleaning vessel (2; 2a, 2b) is flat.

7. The case of one of claims 1 to 6, characterized in that the bottom portion of the cleaning chamber (4; 4a, 4b) is formed with a spherical shape having a radius of 7 to 20 mm.

8. The case of one of claims 1 to 7, characterized in that the bottom portion of the cleaning ball (1; 1a; 35) is formed with a spherical shape having a radius of 1 to 10 mm.

## Patentansprüche

1. Behälter für die Reinigung und Aufbewahrung von Kontaktlinsen (L) enthaltend zwei Reinigungsbehälter (2; 2a, 2b) mit jeweils einer eingesenkten Reinigungskammer (4; 4a, 4b) für die Aufnahme einer Kontaktlinse, die jeweils mit einem Deckel (5; 5a, 5b) versehen ist, wobei jede Reinigungskammer eine konkave innere Bodenfläche aufweist, welche entsprechend der Krümmung der Kontaktlinse (L) gekrümmt ist, so daß die Kontaktlinse größengleich damit in Berührung gebracht werden kann,
**dadurch gekennzeichnet, daß**
sich in jeder Reinigungskammer (4; 4a, 4b) mindestens eine Reinigungskugel (1; 1a; 35) befindet.

2. Behälter nach Anspruch 1,
**dadurch gekennzeichnet, daß**
in jeder Reinigungskammer (4a, 4b) eine Vielzahl von Reinigungskugeln (1a) aufgenommen ist.

3. Behälter nach Anspruch 1,
**dadurch gekennzeichnet, daß**
die Reinigungskugel (35) mit einem Stiel (35a) versehen ist, welcher sich durch eine Öffnung (6) erstreckt, die in dem Deckel (5) der Reinigungskammer (4) vorgesehen ist.

4. Behälter nach einem der Ansprüche 1 bis 3,
**dadurch gekennzeichnet, daß**
die Oberfläche der Reinigungskugeln (1; 1a; 35) und/oder der Boden der Reinigungskammer (4; 4a, 4b) eine Reibungsfläche aufweist.

5. Behälter nach einem der Ansprüche 1 bis 4,
**dadurch gekennzeichnet, daß**
der Reinigungsbehälter (2; 2a, 2b) an seiner Außenseite mit einem Griffteil (8; 16) versehen ist.

6. Behälter nach einem der Ansprüche 1 bis 5,
**dadurch gekennzeichnet, daß**
die äußere Bodenfläche (9) des Reinigungsbehälters (2; 2a, 2b) eben ausgebildet ist.

7. Behälter nach einem der Ansprüche 1 bis 6,
**dadurch gekennzeichnet, daß**
der Bodenteil der Reinigungskammer (4; 4a, 4b) eine abgerundete Form mit einem Radius von 7 bis 20 mm aufweist.

8. Behälter nach einem der Ansprüche 1 bis 7,
**dadurch gekennzeichnet, daß**
der Bodenteil der Reinigungskugel (1; 1a: 35) eine abgerundete Form mit einem Radius von 1 bis 10 mm aufweist.

## Revendications

1. Boîtier pour le nettoyage et la conservation de lentilles de contact (L), comportant deux bacs de nettoyage (2; 2a, 2b) chacun formé avec une chambre de nettoyage évidée (4; 4a, 4b) pour loger une lentille de contact et chacun pourvu d'un couvercle (5; 5a, 5b), chaque chambre de nettoyage ayant une surface de fond interne concave qui est courbée de manière complémentaire à la courbure de la lentille de contact (L) de sorte que la lentille de contact peut être montée en contact face à face avec celle-ci, caractérisé en ce qu'à l'intérieur de chaque chambre de nettoyage (4; 4a, 4b) est logée au moins une bille nettoyante (1; 1a; 35).

2. Boîtier selon la revendication 1, caractérisé en ce que plusieurs billes nettoyantes (1a) sont logées dans chaque chambre de nettoyage (4a, 4b).

3. Boîtier selon la revendication 1, caractérisé en ce que la bille nettoyante (35) est pourvue d'une tige (35a) se prolongeant à travers un trou (6) prévu dans le couvercle (5) de la chambre de nettoyage (4).

4. Boîtier selon l'une quelconque des revendications 1 à 3, caractérisé en ce que la surface des billes nettoyantes (1; 1a; 35) et/ou le fond de la chambre de nettoyage (4; 4a, 4b) présentent une rugosité.

5. Boîtier selon l'une quelconque des revendications 1 à 4, caractérisé en ce que le bac de nettoyage (2; 2a, 2b) est pourvu d'une poignée (8; 16) sur l'extérieur.

6. Boîtier selon l'une quelconque des revendications 1 à 5, caractérisé en ce que la surface externe (9) du fond du dit bac de nettoyage (2; 2a, 2b) est plate.

7. Boîtier selon l'une quelconque des revendications 1 à 6, caractérisé en ce que la portion du fond de la chambre de nettoyage (4; 4a, 4b) présente une forme sphérique ayant un rayon de 7 à 20 mm.

8. Boîtier selon l'une quelconque des revendications 1 à 7, caractérisé en ce que la portion du fond de la bille nettoyante (1; 1a; 35) présente une forme sphérique ayant un rayon de 1 à 10 mm.
